# EUROPEAN PATENT APPLICATION

(11) **EP 4 238 823 A1**
(43) Date of publication of application: **06.09.2023**
(21) Application number: 22425010.0
(22) Date of filing: 03.03.2022
(51) Int. Cl.: B60P 3/08, B62D 63/06

(54) **TRAILER EQUIPPED WITH DOUBLE-WHEELED SETS AND VEHICLE INCLUDING THIS TRAILER**

(71) Applicant: Rolfo S.p.A., 12042 Bra (CN) (IT)
(72) Inventor: Arnulfo, Elio, I-12042 BRA (CN) (IT)
(74) Representative: Garavelli, Paolo

(57) **Abstract**

A trailer (4) for the transport of goods, in particular cars, is described, comprising at least three sets of transport wheels, each of the sets being composed of four wheels (7A, 7B, 7C, 7D) placed side by side on the same rotation axle, two first wheels (7A, 7C) placed on one side of the trailer (4) with respect to its direction of travel, and two second wheels (7B, 7D) placed on the opposite side of the trailer (4), the rotation axle of a first of the sets of wheels being placed at a distance variable from 130 cm to 140 cm from the rotation axle of a second of the sets of wheels, and the rotation axle of a second of the sets of wheels being placed at a distance variable from 130 cm to 140 cm from the rotation axle of a third of the wheel sets. A vehicle (1) equipped with this trailer (4) is also described.

## Description

The present invention relates to a trailer for the transport of goods (in particular cars) equipped with a plurality of sets of double wheels, and to a vehicle comprising such a trailer.

Vehicles equipped with trailers for transporting goods, in particular motor vehicles, are known in the art, wherein such trailers comprise a plurality of wheel sets for transporting and supporting the trailers themselves.

The Applicant of this Application, for example, produces trailers equipped with three sets side by side, each with two wheels (for a total of six wheels) of transport, and each immediately adjacent to the preceding or following set.

These solutions, however, are not satisfactory in certain application solutions, for example for the transport of heavy goods in Anglo-Saxon countries, such as the United Kingdom and Ireland. This is because the legal requirements in these countries require a greater loading height of the trailer, which implies a greater weight to be supported and transported.

With currently known solutions, therefore, in these operational areas, the following problems occur, which are currently not resolved:
1. the vehicle with single wheels achieves a maximum capacity of 21 t on the axles;
2. the width available for the car on the lower central floor is limited by the width of the wheels;
3. lack of safety for the operator who gets off the car loaded on the trailer, who does not have a sufficiently safe platform to place his feet on it to get off the trailer;
4. not optimal angle of climb on the trailer for the cars.

Object of the present invention is solving the aforementioned prior art problems, by providing a trailer equipped with sets of double wheels, and its related vehicle, which allow obtaining the following advantages:
1. Increased range of the new vehicle. 24 t on the axles are reached, thanks to double wheel tires, adequate axles and brakes, distance between the axles greater than 1300 mm. The previous vehicle, with single wheels, reached a maximum of 21 t on the axles.
2. Greater width available for the car on the lower center floor, which is not limited by the width of the wheels.
3. Greater safety for the operator who gets off the car loaded there, which has a wider platform for the feet.
4. Best angle of climb for cars. Since the passage over the wheels is lower, thanks to the double tires with smaller diameter, the angle of climb is smaller and the cars climb better.

The aforesaid and other objects and advantages of the invention, as will emerge from the following description, are achieved with a trailer equipped with sets of double wheels, and its related vehicle, such as those described in the respective independent claims. Preferred embodiments and non-trivial variations of the present invention form the subject of the dependent claims.

It is understood that all attached claims form an integral part of the present description.

The present invention will be better described by some preferred embodiments thereof, provided by way of non-limiting example, with reference to the attached drawings, in which:
- Figure 1 is a side view of an embodiment of the vehicle and trailer according to the present invention in a loading position;
- Figure 2 is a side view of an embodiment of the vehicle and the trailer according to the present invention in a rest position not loaded;

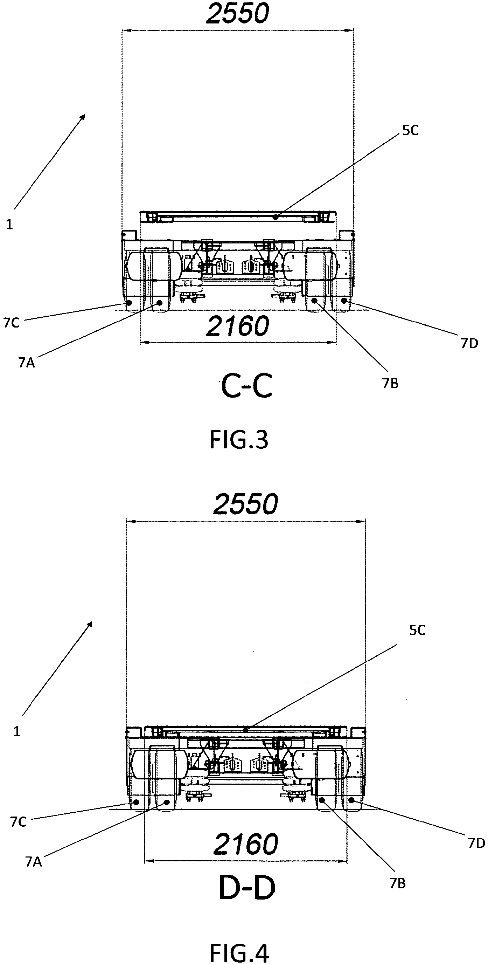

- Figure 3 is a sectional view taken along line C-C of Figure 1; and
- Figure 4 is a sectional view, taken along line D-D of Figure 2.

With reference to the Figures, a preferred embodiment of the present invention is shown and described. It will be immediately obvious that innumerable variations and modifications (for example relating to shape, dimensions, various colors and parts with equivalent functionality) can be made to what is described, without departing from the scope of the invention as appears from the attached claims.

The invention first of all relates to a trailer 4 for the transport of goods, in particular cars, comprising at least three sets of transport wheels, each of these sets being composed of four wheels 7A, 7B, 7C, 7D placed side by side on the same rotation axle, two first wheels 7A, 7C placed on one side of the trailer 4 with respect to the travel direction of the trailer 4 itself, and two second wheels 7B, 7D placed on the opposite side of the trailer 4.

The rotation axle of a first of the wheel sets is placed at a distance variable from 130 cm to 140 cm from the rotation axle of a second of the wheel sets, and the rotation axle of a second of the wheel sets is placed at a distance variable from 130 cm to 140 cm from the rotation axle of one third of the sets of wheels.

In particular, the distance between the axles of the wheel sets is 131 cm.

According to the configuration shown, the total dimensions of the trailer 4 perpendicular to its direction of travel is equal to cm. 255.

With this configuration, it is possible to make sets whose wheels 7A, 7B, 7C, 7D have a diameter ranging from 70 cm to 85 cm, lower than that of the wheels of previous vehicles, obtaining a further benefit for the final solution.

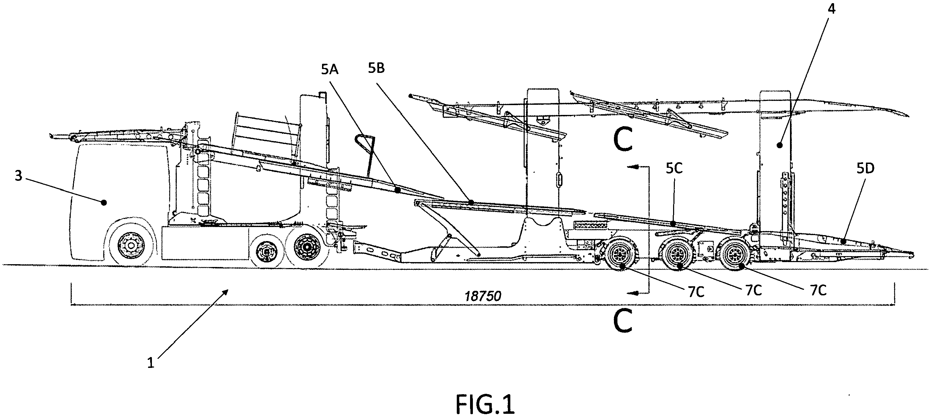

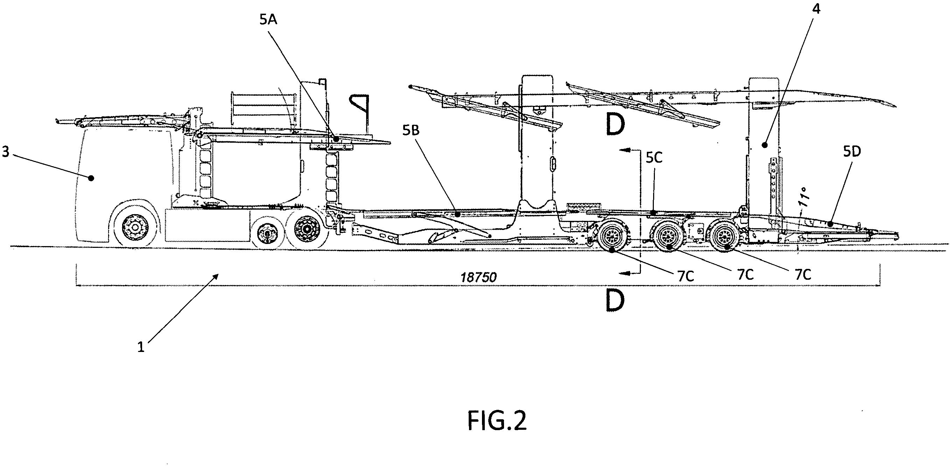

In particular, the diameter of the wheels is 78 cm. Still according to what is shown, the trailer 4 comprises, in a known way, a first liftable loading platform 5B, a second liftable loading platform 5C placed above the wheel sets and upstream of the first loading platform 5B with respect to the loading direction of the goods, and a third loading platform 5D placed upstream of the second loading platform 5C. The two load and rest positions are shown, respectively, in Figures 1 and 2.

The invention therefore also relates to a vehicle 1 for the transport of goods, in particular cars, comprising a tractor 3 with a fourth loading platform 5A and a trailer 4 like the one described above: this vehicle 1 has a total longitudinal length with respect to the direction of travel equal to cm. 1875.

The main advantages of the double wheel configuration of the present invention are:
1. Increased range of the new vehicle. 24 t on the axles are reached, thanks to double wheel tires, adequate axles and brakes, distance between the axles greater than 1300 mm. The previous vehicle, with single wheels, reached a maximum of 21 t on the axles.
2. Greater width available for the car on the lower center floor, which is not limited by the width of the wheels.
3. Greater safety for the operator who gets off the car loaded there, which has a wider platform for the feet.
4. Best angle of climb for cars. Since the passage over the wheels is lower, thanks to the double tires with smaller diameter, the angle of climb is smaller and the cars climb better.

Some preferred embodiments of the present invention have been shown and described above: obviously, numerous variations and modifications, functionally equivalent to the previous ones, which fall within the scope of the invention as highlighted in the attached claims, will be immediately apparent to those skilled in the art.

## Claims

1. Trailer (4) for the transport of goods, in particular cars, **characterized in that** it comprises at least three sets of transport wheels, each of said sets being composed of four wheels (7A, 7B, 7C, 7D) placed side by side on one same rotation axle, two first wheels (7A, 7C) placed on one side of said trailer (4) with respect to the direction of travel of said trailer (4), and two second wheels (7B, 7D) placed on the opposite side of said trailer (4), the rotation axle of a first of said wheel sets being placed at a distance variable from 130 cm to 140 cm from the rotation axle of a second of said wheel sets, and the rotation axle of a second of said sets of wheels being placed at a distance variable from 130 cm to 140 cm from the rotation axle of a third of said sets of wheels.

2. Trailer (4) according to claim 1, **characterized in that** the distance between the axles of said wheel sets is 131 cm.

3. Trailer (4) according to claim 1 or 2, **characterized in that** the liftable platform (5C) placed above the sets of wheels is at least 210 cm wide.

4. Trailer (4) according to any of the preceding claims, **characterized in that** the total size of said trailer (4) perpendicular to its direction of travel is equal to cm. 255.

5. Trailer (4) according to any one of the preceding claims, **characterized in that** it comprises a first liftable loading platform (5B), a second liftable loading platform (5C) placed above said sets of wheels and upstream of the first loading platform (5B) with respect to the loading direction of the goods, and a third loading platform (5D) placed upstream of the second loading platform (5C).

6. Trailer (4) according to any one of the preceding claims, **characterized in that** the diameter of each of said wheels (7A, 7B, 7C, 7D) varies from 70 cm to 85 cm.

7. Trailer (4) according to any one of the preceding claims, **characterized in that** the diameter of each of said wheels (7A, 7B, 7C, 7D) is equal to 78 cm.

8. Vehicle (1) for the transport of goods, in particular motor cars, comprising a tractor (3) with a fourth loading platform (5A) and a trailer (4) according to any one of the preceding claims, said vehicle (1) having a total longitudinal length with respect to the direction of travel equal to cm. 1875.
